# EUROPEAN PATENT APPLICATION

(11) **EP 2 749 383 A1**
(43) Date of publication of application: **02.07.2014**
(21) Application number: 13194760.8
(22) Date of filing: 28.11.2013
(51) Int. Cl.: B25J 9/00, B25J 15/00

(54) **Robot system and robot**

(30) Priority: 25.12.2012 JP 2012281515
(71) Applicant: Kabushiki Kaisha Yaskawa Denki, Kitakyushu-shi, Fukuoka 806-0004 (JP)
(72) Inventor: Akama, Toru, Kitakyushu-shi, Fukuoka 806-0004 (JP); Takeno, Ryo, Kitakyushu-shi, Fukuoka 806-0004 (JP)
(74) Representative: Viering, Jentschura & Partner Patent- und Rechtsanwälte

(57) **Abstract**

A robot system 100 includes a robot that includes a hand 2 and a robot main body 1. The hand 2 is mounted to the robot main body 1 and sucks a box material. The robot main body 1 assembles the box material sucked by the hand 2 while moving the box material in a predetermined direction. A first fixed folding member 4 accepts an inside flap of the box material so as to fold the inside flap and render the inside flap into a bottom surface or an upper surface of the box material. A second fixed folding member 5 accepts an outside flap of the box material so as to fold the outside flap and render the outside flap into the bottom surface or the upper surface of the box material.

## Description

### BACKGROUND

### FIELD OF THE INVENTION

The present invention relates to a robot system and a robot.

### DISCUSSION OF THE BACKGROUND

Conventionally, carton formers are known to assemble box materials (see, for example, Japanese Unexamined Patent Application Publication No. 6-64072). Japanese Unexamined Patent Application Publication No. 6-64072 discloses a carton former that includes an inner flap folding device and an outer flap folding device. The inner flap folding device folds an inner flap (inside flap) that is to be the bottom surface of the box material. The outer flap folding device folds an outer flap (outside flap) that is to be the bottom surface of the box material over the inner flap. This carton former adjusts the inner flap folding device and the outer flap folding device according to the size of the box material. In this manner, the carton former is presumably capable of assembling box materials of different sizes.

The contents of Japanese Unexamined Patent Application Publication No. 6-64072 are incorporated herein by reference in their entirety.

Unfortunately, the carton former recited in Japanese Unexamined Patent Application Publication No. 6-64072, which adjusts the inner flap folding device and the outer flap folding device according to the size of the box material in an attempt to assemble box materials of different sizes, requires a user to adjust the inner flap folding device and the outer flap folding device according to every size of the box material. This can increase the work burden imposed on the user.

The present invention has been made in view of the above-described circumstances, and it is an object of the present invention to provide a robot system and a robot that eliminate or minimize an increase in the work burden imposed on the user.

### SUMMARY

According to one aspect of the present embodiment, a robot system 100 includes a robot, a first fixed folding member 4, and a second fixed folding member 5. The robot includes a hand 2 and a robot main body 1. The hand 2 is mounted to the robot main body 1 and is configured to suck a box material. The robot main body 1 is configured to assemble the box material sucked by the hand 2 while moving the box material in a predetermined direction. The first fixed folding member 4 is configured to accept an inside flap of the box material that is being moved by the robot main body 1 so as to fold the inside flap and render the inside flap into at least one of a bottom surface and an upper surface of the box material. The second fixed folding member 5 is configured to accept an outside flap of the box material that is being moved by the robot main body 1 so as to fold the outside flap over the inside flap and render the outside flap into at least one of the bottom surface and the upper surface of the box material.

As described above, the robot system according to the one aspect of the present embodiment includes a first fixed folding member and a second fixed folding member. When the robot main body moves a box material in a predetermined direction, the first fixed folding member accepts an inside flap of the box material, which is to become the bottom surface or the upper surface of the box material, so as to fold the inside flap and render the inside flap into the bottom surface or the upper surface of the box material. When the robot main body moves the box material in the predetermined direction, the second fixed folding member accepts an outside flap of the box material, which is to become the bottom surface or the upper surface of the box material, so as to fold the outside flap over the inside flap and render the outside flap into the bottom surface or the upper surface of the box material. Thus, even when box materials of different sizes are handled, the robot moves according to the size of each box material and brings the box material into contact with the first fixed folding member and the second fixed folding member. This ensures assembly of box materials of different sizes without the need for the user to adjust the first fixed folding member and the second fixed folding member. This, in turn, eliminates or minimizes an increase in the work burden imposed on the user.

According to another aspect of the present embodiment, a robot includes a hand 2 and a robot main body 1. The hand 2 is mounted to the robot main body 1 and is configured to suck a box material. The robot main body 1 is configured to assemble the box material sucked by the hand 2 while moving the box material in a predetermined direction. The robot main body 1 is configured to bring an inside flap of the box material into contact with a first fixed folding member 4 so as to fold the inside flap and render the inside flap into at least one of a bottom surface and an upper surface of the box material. The robot main body 1 is configured to bring an outside flap of the box material into contact with a second fixed folding member 5 so as to fold the outside flap over the inside flap and render the outside flap into at least one of the bottom surface and the upper surface of the box material.

In the robot according to the other aspect of the present embodiment, the robot main body brings the inside flap of the box material, which is to become the bottom surface or the upper surface of the box material, into contact with the first fixed folding member so as to fold the inside flap and render the inside flap into at least one of the bottom surface and the upper surface of the box material. The robot main body also brings the outside flap of the box material, which is to become the bottom surface or the upper surface of the box material over the inside flap, into contact with the second fixed folding member so as to fold the outside flap and render the outside flap into the bottom surface or the upper surface of the box material. Thus, even when box materials of different sizes are handled, the robot moves according to the size of each box material and brings the box material into contact with the first fixed folding member and the second fixed folding member. This ensures assembly of box materials of different sizes without the need for the user to adjust the first fixed folding member and the second fixed folding member. This, in turn, ensures a robot capable of eliminating or minimizing an increase in the work burden imposed on the user.

The above-described configurations eliminate or minimize an increase in the work burden imposed on the user even when box materials of different sizes are to be assembled.

### BRIEF DESCRIPTION OF THE DRAWINGS

A more complete appreciation of the present disclosure and many of the attendant advantages thereof will be readily obtained as the same becomes better understood by reference to the following detailed description when considered in connection with the accompanying drawings, wherein:
FIG. 1 is a perspective view of a robot of a robot system according to one embodiment, illustrating a general arrangement of the robot;
FIG. 2 is a perspective view of a hand of the robot of the robot system according to the one embodiment;
FIG. 3 is a side view of the entire robot system according to the one embodiment;
FIG. 4 is a perspective view of the entire robot system according to the one embodiment;
FIG. 5 is a perspective view of the robot of the robot system according to the one embodiment, illustrating the robot's operation of sucking a box material;
FIG. 6 is a perspective view of the robot of the robot system according to the one embodiment, illustrating the robot's operation of pulling up the box material;
FIG. 7 is a perspective view of the robot of the robot system according to the one embodiment, illustrating the robot's operation of folding an inside flap of the box material at one side of the box material;
FIG. 8 is a perspective view of the robot of the robot system according to the one embodiment, illustrating the robot's operation of folding another inside flap of the box material at the opposite side of the box material;
FIG. 9 is a perspective view of the robot of the robot system according to the one embodiment, illustrating a state before the robot's operation of folding an outside flap of the box material;
FIG. 10 is a perspective view of the robot of the robot system according to the one embodiment, illustrating a state during the robot's operation of folding the outside flap of the box material; and
FIG. 11 is a perspective view of the robot of the robot system according to the one embodiment, illustrating a state after the robot's operation of folding the outside flap of the box material.

### DESCRIPTION OF THE EMBODIMENTS

The embodiments will now be described with reference to the accompanying drawings, wherein like reference numerals designate corresponding or identical elements throughout the various drawings.

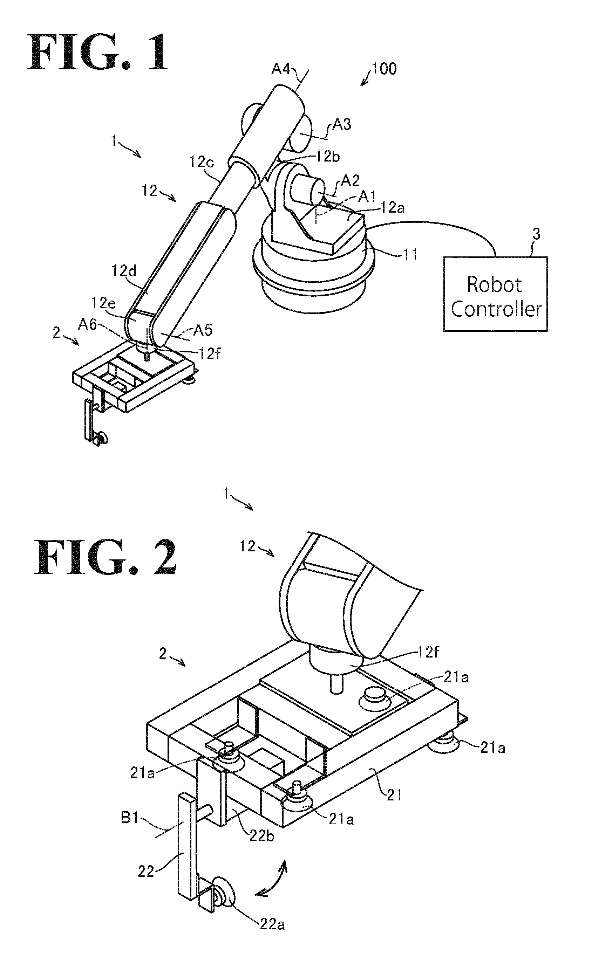

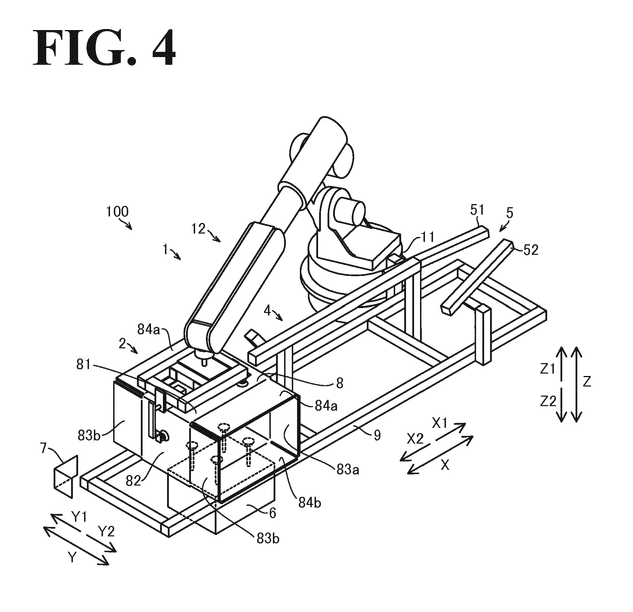

First, a configuration of a robot system 100 will be described by referring to FIGs. 1 and 4.

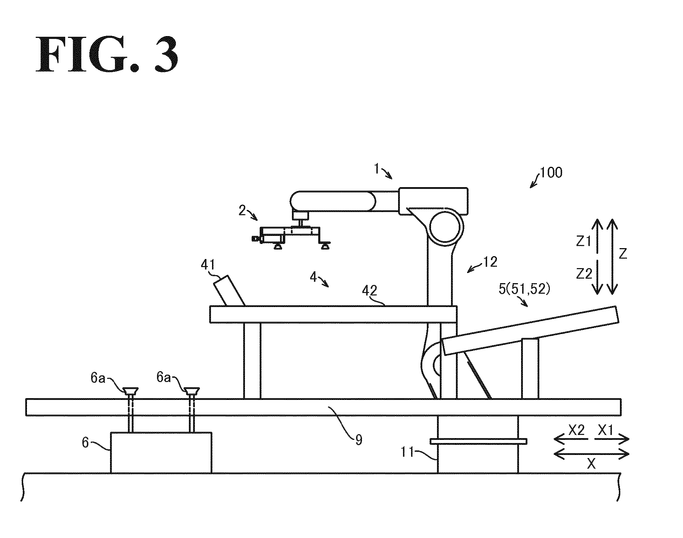

As shown in FIG. 1, the robot system 100 includes a robot and a robot controller 3. The robot includes a robot main body 1 and a hand 2 mounted to the robot main body 1. The robot controller 3 controls the operation of the robot main body 1 and the hand 2. As shown in FIGs. 3 and 4, the robot system 100 includes a first fixed folding member 4, a second fixed folding member 5, a box material holder 6, and a box-material position determinator 7. Also the robot system 100 assembles a box material 8 while moving the box material 8 in an X direction. The X direction is an example of the "predetermined direction".

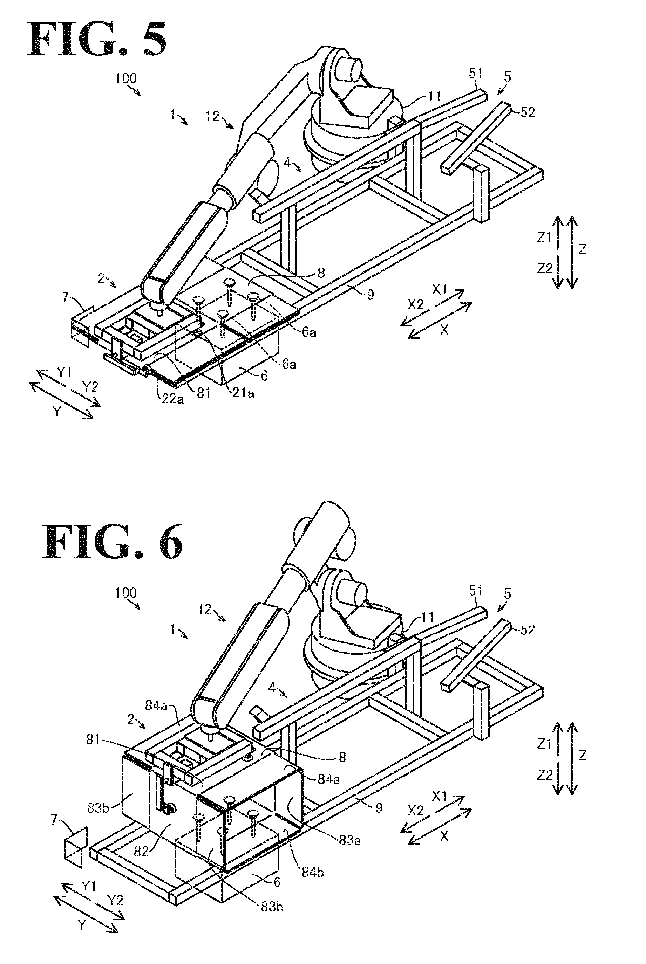

The box material 8 is made of corrugated paper, for example, and assembled into an approximately rectangular parallelepiped shape. The box material 8 has a pair of side surfaces 81, a pair of side surfaces 82, inside flaps 83a and 83b, and outside flaps 84a and 84b. The pair of side surfaces 81 constitute the side surfaces in the longitudinal direction of the box material 8 (see FIG. 6). The pair of side surfaces 82 constitute the side surfaces in the transverse direction of the box material 8 (see FIG. 6). The inside flaps 83a and 83b constitute the bottom surface (upper surface) of the box material 8. The outside flaps 84a and 84b are to be folded inwardly over the inside flaps 83a and 83b to constitute the bottom surface (upper surface) of the box material 8. The side surfaces 81 and the side surfaces 82 are respectively examples of the "first side surface" and the "second side surface".

As shown in FIG. 1, the robot main body 1 is a vertically articulated robot. To the distal end of the robot main body 1, the hand 2 is mounted to suck the box material 8. The robot main body 1 includes a base 11 and a robot arm 12 mounted to the base 11. The robot arm 12 has six degrees of freedom. The robot main body 1 assembles the box material 8 while moving the box material 8 sucked by the hand 2 in the X direction.

Specifically, the robot main body 1 brings the inside flaps 83a and 83b, which are to become the bottom surface or the upper surface of the box material 8, into contact with the first fixed folding member 4 so as to fold the inside flaps 83a and 83b and render the inside flaps 83a and 83b into the bottom surface or the upper surface of the box material 8. Also the robot main body 1 brings the outside flaps 84a and 84b, which are to become the bottom surface or the upper surface of the box material 8 over the inside flaps 83a and 83b, into contact with the second fixed folding member 5 so as to fold the outside flaps 84a and 84b and render the outside flaps 84a and 84b into the bottom surface or the upper surface of the box material 8. The operation of the robot main body 1 will be described in detail later.

The robot arm 12 includes a plurality of arm structures. An arm structure 12a is coupled to the base 11 in a rotatable manner about a rotation axis A1, which is perpendicular to the installation surface of the robot main body 1. An arm structure 12b is coupled to the arm structure 12a in a rotatable manner about a rotation axis A2, which is perpendicular to the rotation axis A1. An arm structure 12c is coupled to the arm structure 12b in a rotatable manner about a rotation axis A3, which is parallel to the rotation axis A2. An arm structure 12d is coupled to the arm structure 12c in a rotatable manner about a rotation axis A4, which is perpendicular to the rotation axis A3. An arm structure 12e is coupled to the arm structure 12d in a rotatable manner about a rotation axis A5, which is perpendicular to the rotation axis A4. An arm structure 12f is coupled to the arm structure 12e in a rotatable manner about a rotation axis A6, which is perpendicular to the rotation axis A5. It is noted that "parallel" and "perpendicular", as used herein, are not only intended to mean precisely "parallel" and "perpendicular", respectively, but also intended more broadly to encompass slight differences from being "parallel" or "perpendicular". Each of the rotation axes A1 to A6 is equipped with a servo motor (joint). Each servo motor includes an encoder to detect the rotation position of the servo motor. Also each servo motor is coupled to the robot controller 3 so that each servo motor operates based on a command from the robot controller 3.

As shown in FIG. 2, the hand 2 is capable of sucking the box material 8. Also the hand 2 is mounted to the arm structure 12f of the robot arm 12, and includes four suction devices 21a and a suction device 22a. The four suction devices 21a suck the side surfaces 81 of the box material 8. The suction device 22a sucks the side surfaces 82, which abut on the side surfaces 81. The four suction devices 21a are disposed on an approximately rectangular frame 21, which is coupled to the arm structure 12f. Also the suction devices 21a use negative pressure to suck the box material 8.

The suction device 22a is disposed at a distal end of an arm 22, which is coupled to the frame 21 in a turnable manner about a turning axis B1. The suction device 22a is turned by an air cylinder 22b about the turning axis B1. Specifically, the suction device 22a is movable relative to the suction devices 21a to a withholding position (see FIG. 4) and a sucking position (see FIG. 2). The withholding position is where the suction device 22a withholds to avoid interference with the suction devices 21a when the suction devices 21a suck the box material 8. The sucking position is where the suction device 22a sucks the side surface 82 of the box material 8. The suction device 22a uses negative pressure to suck the box material 8.

The robot controller 3 controls overall operation of the robot main body 1 (the robot system 100).

Here, in this embodiment, as shown in FIGs. 3 and 4, the first fixed folding member 4 is fixed to an approximately center of a frame 9 in a Y direction, and is elongate in the X direction. Also the first fixed folding member 4 accepts the inside flaps 83a and 83b, which are to become the bottom surface or the upper surface of the box material 8 that is being moved by the robot main body 1, so as to (inwardly) fold the inside flaps 83a and 83b and render the inside flaps 83a and 83b into the bottom surface or the upper surface of the box material 8.

The first fixed folding member 4 includes a protrusion 41 and a slide guide 42. The protrusion 41 and the slide guide 42 of the first fixed folding member 4 are both made of a metal (such as aluminum) bar material having a rectangular cross-section. The protrusion 41 protrudes upward from the slide guide 42. Specifically, the protrusion 41 is disposed on the slide guide 42 at the side of an X2 direction, and is elongate and obliquely upright toward the side of the X2 direction. The slide guide 42 is elongate in the X direction and has a flat upper surface (slide surface) on which the inside flaps 83a and 83b of the box material 8 are to contact and slide. The X2 direction is an example of the "first direction".

Also in this embodiment, the second fixed folding member 5 is fixed to the frame 9. The second fixed folding member 5 accepts the outside flaps 84a and 84b, which are to become the bottom surface or the upper surface of the box material 8 that is being moved by the robot main body 1, so as to (inwardly) fold the outside flaps 84a and 84b and render the outside flaps 84a and 84b into the bottom surface or the upper surface of the box material 8. Similarly to the first fixed folding member 4, the second fixed folding member 5 is made of a metal (such as aluminum) bar material having a rectangular cross-section.

The second fixed folding member 5 is made up of a pair of slide guides 51 and 52. The pair of slide guides 51 and 52 are disposed with a gap that is defined between the pair of slide guides 51 and 52 and that diminishes in an X1 direction. That is, the gap between the pair of slide guides 51 and 52 is wider at the side of the X2 direction than at the side of the X1 direction. Also the pair of slide guides 51 and 52 abut on the first fixed folding member 4 at the side of the X1 direction relative to the first fixed folding member 4. The X1 direction is an example of the "second direction".

As shown in FIG. 3, the pair of slide guides 51 and 52 are inclined relative to the first fixed folding member 4 in an upward direction (Z1 direction) and toward the X1 direction in a side view (when viewed from the Y direction). That is, the ends of the pair of slide guides 51 and 52 at the side of the first fixed folding member 4 (at the side of the X2 direction) are at a lower position (in a Z2 direction) than the ends of the pair of slide guides 51 and 52 at the side of the X1 direction. In a side view (when viewed from the Y direction), the pair of slide guides 51 and 52 overlap with the first fixed folding member 4 in the X2 direction.

As shown in FIGs. 3 and 4, the box material holder 6 holds by suction the box material 8 from below (in Z2 direction) the box material 8 with the corner of the box material 8 in the X2 direction and a Y1 direction being positioned by the box-material position determinator 7. Specifically, the box material holder 6 includes suction devices 6a. The suction devices 6a suck the surface (lower surface) of the box material 8 opposite the surface of the box material 8 sucked by the hand 2.

Next, by referring to FIGs. 4 to 11, an operation of assembling the box material 8 by the robot system 100 according to this embodiment will be described. In assembling the box material 8, the robot system 100 acquires from a program the size and shape of the box material 8, and the robot main body 1 performs an assembly operation that accords with the size and shape of the box material 8.

First, as shown in FIG. 4, when the box material 8 is placed according to positioning by the box-material position determinator 7, the box material holder 6 sucks the box material 8 from below (in the Z2 direction) the box material 8. Then, as shown in FIG. 5, the hand 2, which is mounted to the distal end of the robot main body 1, sucks the box material 8 from above (in the Z1 direction) the box material 8. Specifically, the suction devices 21a of the hand 2 suck the side surface 81 of the box material 8. Here, the suction device 22a of the hand 2 is at the withholding position to avoid interference with the suction devices 21a and the box material 8.

As shown in FIG. 6, with the box material holder 6 sucking the box material 8, the robot main body 1 pulls up the box material 8. Specifically, the robot main body 1 pulls up the side surface 81 of the box material 8 sucked by the suction devices 21a such that the side surfaces 82 are approximately perpendicular to the side surfaces 81. Thus, the box material 8 is rendered into a rectangular parallelepiped shape with both ends open. Then, the suction device 22a moves relative to the suction devices 21a to the sucking position, where the suction device 22a is to suck the side surface 82. Then, the suction device 22a sucks the side surface 82. Thus, the robot main body 1 is holding the box material 8 with the suction devices 21a sucking the side surfaces 81 and the suction device 22a sucking the side surface 82 such that the side surfaces 82 are approximately perpendicular to the side surfaces 81. In this state, the robot main body 1 moves the box material 8 in the X direction so as to assemble the box material 8.

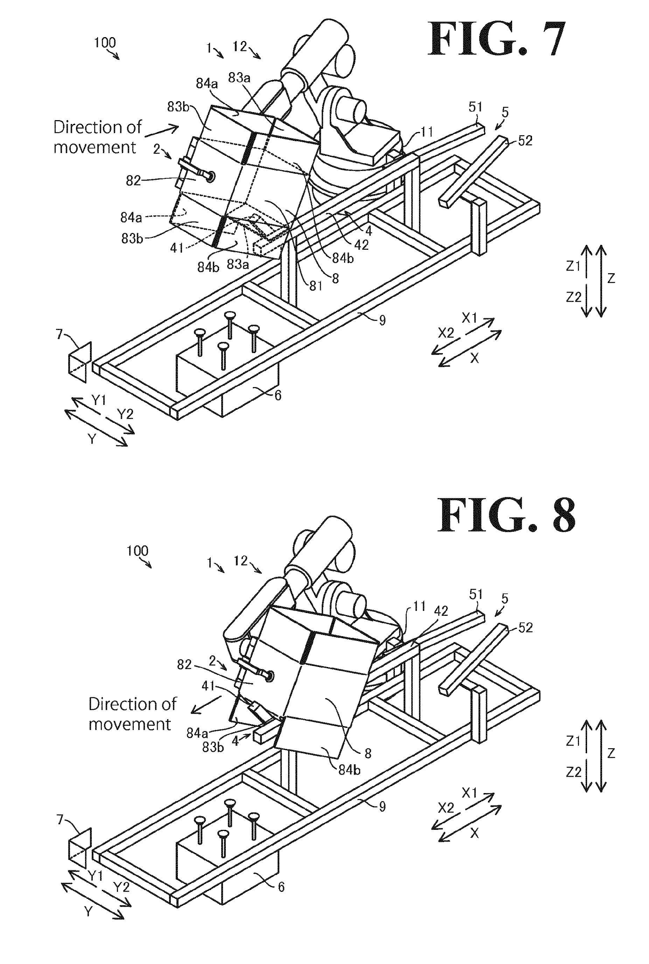

Next, as shown in FIG. 7, the robot main body 1 moves the arm 12 to bring an approximately center of the inside flap 83a of the box material 8 into contact with the first fixed folding member 4, which is elongate in the X direction. Then, the robot main body 1 moves the box material 8 in the X direction, thereby folding the inside flap 83a. Specifically, by moving the box material 8 in the X1 direction, the robot main body 1 brings the inside flap 83a of the box material 8, which is at the side of the X1 direction, into contact with the protrusion 41 of the first fixed folding member 4, thereby folding the inside flap 83a inwardly (that is, in the X2 direction). Here, the robot main body 1 moves the box material 8 in the X1 direction while inclining the box material 8 (that is, in an inclined state relative to the X direction), and brings the inside flap 83a of the box material 8, which is at the side of the X1 direction, into contact with the protrusion 41 of the first fixed folding member 4 from the side of the X2 direction, thereby rendering the inside flap 83a into the bottom surface of the box material 8. Then, the robot main body 1 brings the inside flap 83a of the box material 8 into contact with the slide guide 42 of the first fixed folding member 4 and slides the inside flap 83a in the X1 direction, thereby further folding the inside flap 83a.

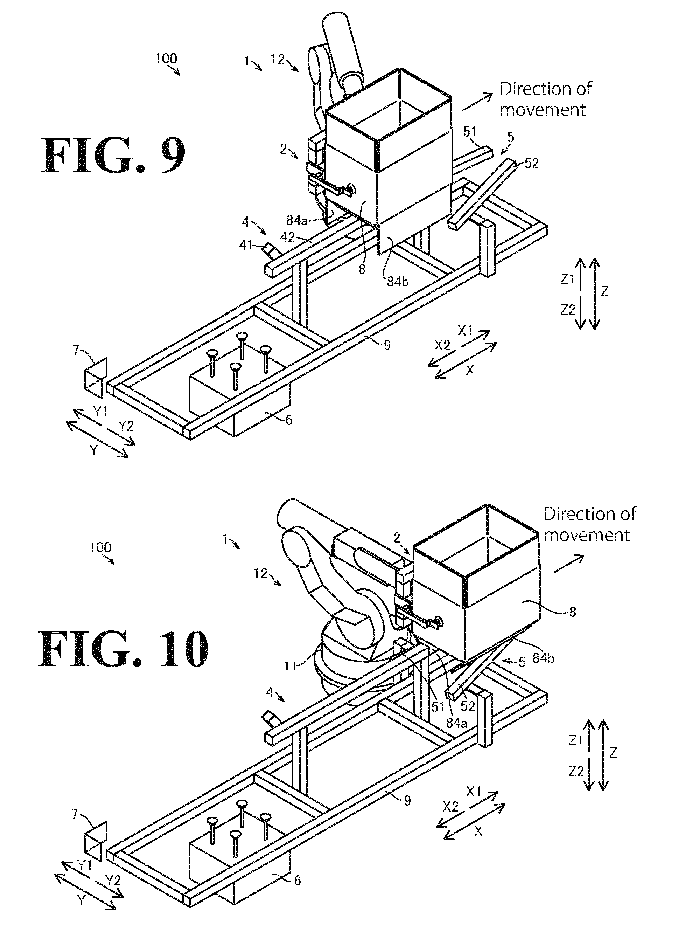

Next, as shown in FIG. 8, the robot main body 1 brings an approximately center of the inside flap 83b of the box material 8 into contact with the first fixed folding member 4, which is elongate in the X direction. Then, the robot main body 1 moves the box material 8 in the X direction, thereby folding the inside flap 83b. Specifically, by moving the box material 8 in the X2 direction, the robot main body 1 brings the inside flap 83b, which is at the side of the X2 direction, into contact with the protrusion 41 of the first fixed folding member 4, thereby folding the inside flap 83b inwardly (that is, in the X1 direction). Here, the robot main body 1 moves the box material 8 in the X2 direction while inclining the box material 8 (that is, in an inclined state relative to the X direction), and brings the inside flap 83b, which is at the side of the X2 direction, into contact with the protrusion 41 of the first fixed folding member 4 from the side of the X1 direction, thereby folding the inside flap 83b and rendering the inside flap 83b into the bottom surface of the box material 8. Then, as shown in FIG. 9, the robot main body 1 brings the inside flap 83b of the box material 8 into contact with the slide guide 42 of the first fixed folding member 4 and slides the inside flap 83b in the X1 direction, thereby further folding the inside flap 83b.

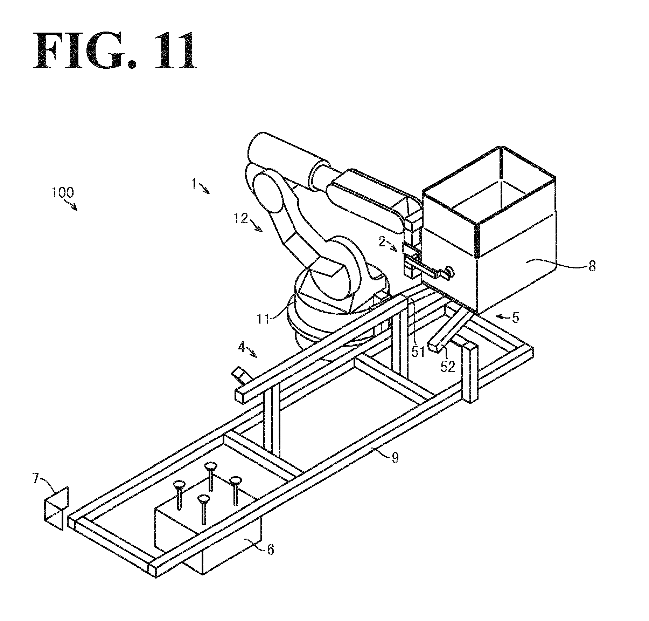

As shown in FIGs. 9 and 10, with the slide guide 42 of the first fixed folding member 4 keeping the inside flaps 83a and 83b folded, the robot main body 1 slides the box material 8 in the X1 direction such that the second fixed folding member 5 (the slide guides 51 and 52) folds the outside flaps 84a and 84b. As shown in FIG. 11, the outside flaps 84a and 84b of the box material 8 are folded and rendered into the bottom surface perpendicular to the side surfaces of the box material 8. Thus, the box material 8 is assembled. Then, the robot main body 1 forwards the assembled box material 8 to a downstream apparatus, and performs an operation similar to the above-described assembly operation so as to assemble a next box material 8. The downstream apparatus is disposed at a height that enables the downstream apparatus to keep the outside flaps 84a and 84b unreturnable (unopenable). (An example is approximately the same height as the height of the ends of the slide guides 51 and 52 at the side of the X1 direction.)

In this embodiment, as described above, the robot main body 1 brings the inside flaps 83a and 83b, which are to become the bottom surface or the upper surface of the box material 8, into contact with the first fixed folding member 4 so as to fold the inside flaps 83a and 83b and render the inside flaps 83a and 83b into the bottom surface or the upper surface of the box material 8. The robot main body 1 also brings the outside flaps 84a and 84b, which are to become the bottom surface or the upper surface of the box material 8 over the inside flaps 83a and 83b, into contact with the second fixed folding member 5 (the pair of slide guides 51 and 52) so as to fold the outside flaps 84a and 84b and render the outside flaps 84a and 84b into the bottom surface or the upper surface of the box material 8. This configuration ensures that even when box materials 8 of different sizes are to be handled, the robot main body 1 moves according to the size of each box material 8 and brings the box material 8 into contact with the first fixed folding member 4 and the second fixed folding member 5. This, in turn, ensures assembly of box materials 8 of different sizes without the need for the user to adjust the first fixed folding member 4 and the second fixed folding member 5. This eliminates or minimizes an increase in the work burden imposed on the user.

Also in this embodiment, as described above, the hand 2 includes the suction devices 21a to suck the side surfaces 81 of the box material 8, and the suction device 22a to suck the side surfaces 82, which abut on the side surfaces 81. This enables the hand 2 of the robot main body 1 to reliably hold the side surfaces 81 and 82 of the box material 8. This, in turn, enables the robot main body 1 to easily assemble the box material 8 while moving the box material 8 in a predetermined direction.

Also in this embodiment, as described above, when the robot main body 1 pulls up the side surface 81 of the box material 8 sucked by the suction devices 21a such that the side surfaces 82 are approximately perpendicular to the side surfaces 81, the suction device 22a moves relative to the suction devices 21a to the sucking position, where the suction device 22a sucks the side surface 82. This ensures that when the suction devices 21a suck and pull up the side surface 81 of the box material 8, the suction device 22a is at a position to avoid interference with the suction devices 21a and the box material 8. When the suction device 22a sucks the side surface 82 that has been pulled up to become approximately perpendicular to the side surfaces 81, the suction device 22a is at the sucking position and thus easily sucks the side surface 82.

Also in this embodiment, as described above, the robot main body 1 holds the box material 8 with the suction devices 21a sucking the side surface 81 and the suction device 22a sucking the side surface 82 such that the side surfaces 82 are approximately perpendicular to the side surfaces 81. In this state, the robot main body 1 assembles the box material 8 while moving the box material 8 in the X direction. This ensures that the box material 8 is kept in a rectangular parallelepiped shape, which eliminates or minimizes deformation of the box material 8 when the box material 8 is assembled.

Also in this embodiment, as described above, the robot main body 1 folds the inside flaps 83a and 83b of the box material 8 by bringing approximately centers of the inside flaps 83a and 83b into contact with the first fixed folding member 4, which is elongate in the X direction, and then moving the box material 8 in the X direction. This ensures that even when box materials 8 of different sizes are to be assembled, the robot main body 1 moves according to the size of each box material 8 so as to bring approximately centers of the inside flaps 83a and 83b of the box material 8 into contact with the first fixed folding member 4, which is elongate in the X direction, thereby folding the inside flaps 83a and 83b. This facilitates stable folding of the inside flaps 83a and 83b.

Also in this embodiment, as described above, the robot main body 1 moves the box material 8 in the X direction to bring the inside flaps 83a and 83b of the box material 8 into contact with the protrusion 41 so as to start folding the inside flaps 83a and 83b. The robot main body 1 also brings the inside flaps 83a and 83b into contact with the slide guide 42 so as to further fold the inside flaps 83a and 83b. This ensures that the protrusion 41 inwardly folds the inside flaps 83a and 83b of the box material 8, and the slide guide 42 further folds the inwardly folded inside flaps 83a and 83b in an easy manner, with the result that the inside flaps 83a and 83b constitute the bottom surface or the upper surface of the box material 8.

Also in this embodiment, as described above, the protrusion 41 of the first fixed folding member 4 is disposed on the slide guide 42 at the side of the X2 direction and is elongate and obliquely upright toward the side of the X2 direction. The robot main body 1 moves the box material 8 in the X1 direction to bring the inside flap 83a of the box material 8, which is at the side of the X1 direction, into contact with the protrusion 41 of the first fixed folding member 4, thereby folding the inside flap 83a and rendering the inside flap 83a into the bottom surface or the upper surface of the box material 8. The robot main body 1 also moves the box material 8 in the X2 direction to bring the inside flap 83b, which is at the side of the X2 direction, into contact with the protrusion 41 of the first fixed folding member 4, thereby folding the inside flap 83b and rendering the inside flap 83b into the bottom surface or the upper surface of the box material 8. This ensures that the protrusion 41, which is elongate and obliquely upright toward the side of the X2 direction, accepts the inside flap 83a of the box material 8, which is at the side of the X1 direction, thereby easily inwardly folding the inside flap 83a, which is at the side of the X1 direction. The protrusion 41 also accepts the inside flap 83b of the box material 8, which is at the side of the X2 direction, thereby easily inwardly folding the inside flap 83b, which is at the side of the X2 direction.

Also in this embodiment, as described above, the robot main body 1 moves the box material 8 in the X1 direction while inclining the box material 8, and brings the inside flap 83a of the box material 8, which is at the side of the X1 direction, into contact with the protrusion 41 of the first fixed folding member 4 from the side of the X2 direction, thereby folding the inside flap 83a and rendering the inside flap 83a into the bottom surface or the upper surface of the box material 8. The robot main body 1 also moves the box material 8 in the X2 direction while inclining the box material 8, and brings the inside flap 83b, which is at the side of the X2 direction, into contact with the protrusion 41 of the first fixed folding member 4 from the side of the X1 direction, thereby folding the inside flap 83b and rendering the inside flap 83b into the bottom surface or the upper surface of the box material 8. Thus, when folding the inside flap 83a of the box material 8, which is at the side of the X1 direction, the robot main body 1 inclines the box material 8 and brings the inside flap 83a into contact with the protrusion 41 of the first fixed folding member 4 from the side of the X2 direction. This ensures that the to-be-folded inside flap 83a, which is at the side of the X1 direction, is brought into contact with the protrusion 41, while at the same time the inside flap 83b, which is at the side of the X2 direction, is prevented from contacting the protrusion 41 and being folded outwardly. When folding the inside flap 83b of the box material 8, which is at the side of the X2 direction, the robot main body 1 inclines the box material 8 and brings the inside flap 83b into contact with the protrusion 41 of the first fixed folding member 4 from the side of the X1 direction. This prevents the inside flap 83b from contacting the slide guide 42, which is disposed at the side of the X1 direction relative to the protrusion 41, before the inside flap 83b contacts the protrusion 41. This, as a result, prevents the inside flap 83b from being folded outwardly.

Also in this embodiment, as described above, the pair of slide guides 51 and 52 abut on the first fixed folding member 4 at the side of the X1 direction relative to the first fixed folding member 4. The pair of slide guides 51 and 52 are elongate with a gap that is defined between the pair of slide guides 51 and 52 and that diminishes in the X1 direction in a plan view. This ensures that after the inside flaps 83a and 83b have been folded on the first fixed folding member 4, the pair of slide guides 51 and 52, which are at the side of the X1 direction, easily fold the outside flaps 84a and 84b over the inside flaps 83a and 83b. Further, the pair of slide guides 51 and 52 are elongate in such a manner that the gap between the pair of slide guides 51 and 52 diminishes in the X1 direction in a plan view (when viewed from the Z direction). This ensures that moving the box material 8 in the X1 direction along the slide guides 51 and 52 folds the outside flaps 84a and 84b inwardly in an easy manner.

Also in this embodiment, as described above, the second fixed folding member 5 (the slide guides 51 and 52) are inclined upward relative to the first fixed folding member 4 (the slide guide 42) toward the X1 direction in a side view (when viewed from the Y direction). This ensures that with the first fixed folding member 4 keeping the inside flaps 83a and 83b folded, the box material 8 is moved in the X1 direction while the second fixed folding member 5 folds the outside flaps 84a and 84b over the inside flaps 83a and 83b.

Also in this embodiment, as described above, the second fixed folding member 5 (the slide guides 51 and 52) is disposed at the side of the X1 direction relative to the first fixed folding member 4 while overlapping with the first fixed folding member 4 in the X direction. With the first fixed folding member 4 keeping the inside flaps 83a and 83b folded, the robot main body 1 slides the box material 8 in the X1 direction such that the second fixed folding member 5 folds the outside flaps 84a and 84b. This prevents the folded inside flaps 83a and 83b from returning to the original state, and ensures that the outside flaps 84a and 84b are reliably folded on the outside of the inside flaps 83a and 83b.

Obviously, numerous modifications and variations of the present disclosure are possible in light of the above teachings. It is therefore to be understood that within the scope of the appended claims, the present disclosure may be practiced otherwise than as specifically described herein.

For example, while in the above-described embodiment the box material to be assembled has been illustrated as being made of corrugated paper, other exemplary box materials that can be assembled include a box material made of corrugated plastic, and a box material other than a corrugated paper box material, such as a thick paper box material.

While in the above-described embodiment the robot arm of the robot has been illustrated as having six degrees of freedom, the robot arm may have other than six degrees of freedom (such as five degrees of freedom and seven degrees of freedom).

While in the above-described embodiment the robot system has been illustrated as folding the bottom surface of the box material to assemble the box material, the robot system may also fold, for example, the upper surface of the box material to assemble the box material. It is also possible to fold both the bottom surface and the upper surface of the box material to assemble the box material.

While in the above-described embodiment the second suction device has been illustrated as turning to make a movement relative to the first suction device, the second suction device may also make a reciprocate movement as its movement relative to the first suction device.

In the above-described embodiment, the robot system has been illustrated as acquiring from a program the size and shape of the box material to make the robot main body perform an assembly operation that accords with the size and shape of the box material. The robot system may also include an imaging device or a code reader, and acquire information indicating a code or a mark contained in the box material from the imaging device or the code reader, in order for the robot main body to perform an assembly operation that accords with the size and shape of the box material.

While in the above-described embodiment the protrusion of the first fixed folding member has been illustrated as being fixed to the slide guide, the protrusion may move relative to the slide guide in accordance with, for example, the size or shape of the box material.

While in the above-described embodiment the box material holder has been illustrated as sucking the box material from below the box material, it is also possible, for example, not to provide the box material holder. In this case, it is possible to pile up a plurality of box materials.
- 1: Robot main body
- 2: Hand
- 4: First fixed folding member
- 5: Second fixed folding member
- 8: Box material
- 21a: Suction device (first suction device)
- 22a: Suction device (second suction device)
- 41: Protrusion
- 42: Slide guide
- 51, 52: Slide guide (second fixed folding member)
- 81: Side surface (first side surface)
- 82: Side surface (second side surface)
- 83a, 83b: Inside flap
- 84a, 84b: Outside flap
- 100: Robot system

## Claims

1. A robot system 100, **characterized by**:
a robot comprising:
a hand 2 configured to suck a box material; and
a robot main body 1 to which the hand 2 is mounted, the robot main body 1 being configured to assemble the box material sucked by the hand 2 while moving the box material in a predetermined direction;
a first fixed folding member 4 configured to accept an inside flap of the box material that is being moved by the robot main body 1 so as to fold the inside flap and render the inside flap into at least one of a bottom surface and an upper surface of the box material; and
a second fixed folding member 5 configured to accept an outside flap of the box material that is being moved by the robot main body 1 so as to fold the outside flap over the inside flap and render the outside flap into at least one of the bottom surface and the upper surface of the box material.

2. The robot system 100 according to claim 1, wherein the hand 2 comprises,
a first suction device 21a configured to suck a first side surface of the box material, and
a second suction device 22a configured to suck a second side surface of the box material abutting the first side surface.

3. The robot system 100 according to claim 2, wherein the robot main body 1 is configured to pull up the first side surface of the box material sucked by the first suction device 21a while making the second suction device 22a move relative to the first suction device 21a to a suction position and suck the second side surface at the suction position so as to make the second side surface approximately perpendicular to the first side surface.

4. The robot system 100 according to claim 2 or 3, wherein the robot main body 1 is configured to assemble the box material while moving the box material in the predetermined direction with the first suction device 21a sucking the first side surface and the second suction device 22a sucking the second side surface such that the second side surface is approximately perpendicular to the first side surface.

5. The robot system 100 according to any one of claims 1 to 4, wherein the first fixed folding member 4 is elongate in the predetermined direction, and the robot main body 1 is configured to bring an approximately center of the inside flap of the box material into contact with the first fixed folding member 4 to move the box material in the predetermined direction, so as to fold the inside flap.

6. The robot system 100 according to any one of claims 1 to 5,
wherein the first fixed folding member 4 comprises
a slide guide 42 elongate in the predetermined direction, and
a protrusion 41 protruding upward from the slide guide 42, and
wherein the robot main body 1 is configured to move the box material in the predetermined direction and bring the inside flap of the box material into contact with the protrusion 41 so as to start folding the inside flap, and configured to bring the inside flap into contact with the slide guide 42 so as to further fold the inside flap.

7. The robot system 100 according to claim 6,
wherein the predetermined direction comprises a first direction and a second direction opposite the first direction, and the protrusion 41 of the first fixed folding member 4 is disposed on the slide guide 42 at a side of the first direction and is elongate and obliquely upright toward the side of the first direction, and
wherein the inside flap of the box material comprises a first inside flap and a second inside flap, and the robot main body 1 is configured to move the box material in the second direction to bring one inside flap, among the first inside flap and the second inside flap, that is at a side of the second direction into contact with the protrusion 41 of the first fixed folding member 4 so as to fold the one inside flap and render the one inside flap into at least one of the bottom surface and the upper surface of the box material, and
wherein the robot main body 1 is configured to move the box material in the first direction to bring another inside flap, among the first inside flap and the second inside flap, that is at the side of the first direction into contact with the protrusion 41 of the first fixed folding member 4 so as to fold the other inside flap and render the other inside flap into at least one of the bottom surface and the upper surface of the box material.

8. The robot system 100 according to claim 7,
wherein the robot main body 1 is configured to incline the box material and move the inclined box material in the second direction so as to bring the one inside flap, among the first inside flap and the second inside flap of the box material, that is at the side of the second direction into contact with the protrusion 41 of the first fixed folding member 4 from the side of the first direction so as to fold the one inside flap and render the one inside flap into at least one of the bottom surface and the upper surface of the box material, and
wherein the robot main body 1 is configured to incline the box material and move the inclined box material in the first direction so as to bring the other inside flap at the side of the first direction into contact with the protrusion 41 of the first fixed folding member 4 from the side of the second direction so as to fold the other inside flap and render the other inside flap into at least one of the bottom surface and the upper surface of the box material.

9. The robot system 100 according to any one of claims 1 to 8, wherein the second fixed folding member 5 comprises a pair of second fixed folding members disposed at the side of the second direction relative to the first fixed folding member 4 with a gap that is defined between the pair of second fixed folding members and that diminishes in the second direction in a plan view.

10. The robot system 100 according to claim 9, wherein the second fixed folding member 5 is inclined upward relative to the first fixed folding member 4 toward the side of the second direction in a side view.

11. The robot system 100 according to claim 9 or 10,
wherein the second fixed folding member 5 is disposed at the side of the second direction relative to the first fixed folding member 4 while overlapping with the first fixed folding member 4 in the predetermined direction, and
wherein the robot main body 1 is configured to slide the box material in the second direction such that the second fixed folding member 5 folds the outside flap with the first fixed folding member 4 keeping the inside flap folded.

12. A robot, **characterized by**:
a hand 2 configured to suck a box material; and
a robot main body 1 to which the hand 2 is mounted, the robot main body 1 being configured to assemble the box material sucked by the hand 2 while moving the box material in a predetermined direction, the robot main body 1 being configured to bring an inside flap of the box material into contact with a first fixed folding member 4 so as to fold the inside flap and render the inside flap into at least one of a bottom surface and an upper surface of the box material, and configured to bring an outside flap of the box material into contact with a second fixed folding member 5 so as to fold the outside flap over the inside flap and render the outside flap into at least one of the bottom surface and the upper surface of the box material.
